# EUROPEAN PATENT APPLICATION

(11) **EP 2 444 571 A1**
(43) Date of publication of application: **25.04.2012**
(21) Application number: 10013883.3
(22) Date of filing: 22.10.2010
(51) Int. Cl.: E04H 12/08, E04H 12/10, F03D 11/04

(54) **Lattice tower**

(71) Applicant: Rautaruukki OYJ, 01531 Vantaa (FI)
(72) Inventor: Hüsemann, Klaus, 32351 Stemwede (DE); Meiners, Wilhelm, 49163 Bohmte (DE)
(74) Representative: Gerstein, Hans Joachim

(57) **Abstract**

A lattice tower (1), in particular for wind power stations, is disclosed, comprising a lower part (2) of tower, said lower part (2) of tower comprising a plurality of corner posts (4). Said corner posts (4) each are formed by a plurality of profile elements (12) having a curved or angled profile in cross-section and being joined together to form an overall profile of the corner posts (4) being closed in cross-section, and comprising cross-struts (6). Said cross-struts (6) extending between dedicated corner posts (4) for connecting the corner posts (4) to form a lattice tower (1). The lattice tower (1) comprising an upper part (3) of tower, said upper part (3) of tower comprises at least one mast (7) having a star-shaped cross-section. Said mast (7) being formed by a plurality of wings (10) extending from a common centre line (11) in different directions from each other.

## Description

The invention is related to a lattice tower in particular for wind power stations, comprising a lower part of tower, said lower part of tower comprising a plurality of corner posts, said corner posts each are formed by a plurality of profile elements having a curved or angled profile in cross section and being joined together to form an overall profile of the corner posts being closed in cross-section, and comprising cross-struts, said cross-struts extending between dedicated corner posts for connecting the corner posts to form a lattice tower, and comprising an upper part of tower.

The load of a lattice tower increases with the height of the tower and with the size of parts mounted on the top of the tower, e. g. with the size of wind power stations. A tower can be stabilized by increasing the cross-section of the profile. However, the width of profiles are limited due to restrictions of manufacturing, in particular for forming an angled profile in cross-section. Further, the increased width of profiles increases the overall weight of the tower and the costs.

WO 2009/024356 discloses a lattice tower having four corner posts. The corner posts are assembled by use of three angled metal profiles forming a hollow mast. The direction of extension of the flanges of the angled profiles are forming a triangle.

DE 10 2005 012 817 A1 discloses a lattice tower also comprising four corner posts formed by use of two angled profiles mounted to each other to provide a hollow mast. A similar construction is known from DE 10 2008 018 852 A1.

With increased height of the lattice tower, the diameter from top to bottom is increasing significantly. With an increased length of the blades, there is the further problem that the blades are flexing towards the corner posts due to the wind load. Thus, the blades of a large wind power station require free space between the corner posts and the blades.

It is therefore the problem for the present invention to provide an improved lattice tower.

The problem is solved with the lattice tower according to the preamble of claim 1 in that the upper part of the tower comprises at least one mast having a star-shaped cross-section, said mast being formed by a plurality of wings extending from a common center line in different direction from each other.

According to the present invention, the upper part of the lattice tower is formed by star-shaped masts. The upper part of tower with masts having a star-shaped cross-section is stable and light. This design is well suited to carry a wind power station of large size having long blades. The inclination of the upper part of the lattice tower formed by the star-shaped masts from the bottom to the top of the upper part of tower can be reduced so that the space between the blades and the corner posts is increased compared to lattice towers formed by corner posts with angled profiles in the prior art. On the other hand, the lower part below this upper part of tower is formed by a lattice tower comprising corner posts assembled by use of a plurality of profile elements having a curved or angled profile. The construction of the lower part of the lattice tower is such that this part is able to carry high loads. The lower part of the tower is designed to reduce the area moment of inertia.

In a preferred embodiment, the upper part of the tower directly joins the upper free end of the lower part of the tower, wherein the wings each are located between two dedicated flanges of profile elements forming a hollow post, said flanges and the intermediate wing being arranged side-by-side being connected to each other.

The masts having a star-shaped cross-section are perfectly adapted to the corner posts of the lower part of the lattice tower formed by profile elements due to the fact that the wings of the star-shaped masts are able to be located between two dedicated flanges of the profile elements. The direction of extension of the flanges of the profile elements of the lower part of the lattice tower have to be adapted to the direction of wings of star-shaped cross-section of the masts of the upper lattice tower. By connecting the wings of the star-shaped masts between the flanges of the profile elements of the lower part of the tower, the force of the upper part of the tower is directly guided to the lower part of the tower without any moment of inertia.

In another embodiment, the upper part of the tower indirectly joins the upper free end of the lower part of the tower. Then, a transmission element is provided between the lower part of the tower and the upper part of the tower. The additional transmission element can be of advantage in case that form and/or size of the masts of the upper part of the lattice tower does not fit to the corner posts of the lower part of tower so that adaption is required. Also the additional transmission element may have angled structure especially in order to achieve posts of lower part and masts of upper part non-parallel to each other.

Preferrably, the upper part of tower comprises a number of masts according to the number of corner posts. Dedicated masts are connected with each other by cross-struts to form a lattice tower.

The at least one star-shaped mast can be assembled by use of a plurality of metal bar elements forming the wings. The metal bar elements may be welded to each other along the centre line on the edges facing to each other.

In another embodiment, the star-shaped mast can be assembled by a plurality of metal bar elements forming the wings, wherein the metal bar elements are joined to each other by use of angled brackets abutting the metal bar elements adjacent to the center line. By use of the additional bar elements the star-shaped masts can be assembled on the place where the lattice tower is erected. Thus, the transport of the material over the roads is much easier.

In another embodiment, the at least one star-shaped mast is assembled by use of a plurality of metal bar elements forming the wings. The metal bar elements are angled in a mounting area along the center line to form mounting flanges. The bar elements arranged side-by-side are joined to each other on the mounting flange of one bar element and on the mounting area of the other bar element so that the mounting flange of the first bar element abuts the mounting area of the other bar element. Thus, the angled metal bar elements can be mounted to each other without any additional elements to form an integral mast having a star-shaped cross-section.

The invention is described in the following by way of an example with the enclosed drawings. It shows
- figure 1 -: schematic drawing of a lattice tower having a lower part and an upper part of tower, wherein the inclination of the lower part is higher that the inclination of the upper part of tower;
- figure 2 -: perspective drawing of the joint between the upper part and lower part of tower;
- figure 3 -: side view of the connection between the upper part and lower part of tower;
- figure 4 -: cross-sectional view of the first embodiment of a star-shaped mast;
- figure 5 -: cross-sectional view of second embodiment of the star-shaped mast;
- figure 6 -: cross-sectional view of the third embodiment of the starshaped mast;
- figure 7 -: cross-section of a corner post of the lower part of the tower comprising three angled profile elements;
- figure 8 -: cross-section of the lower part of the lattice tower.

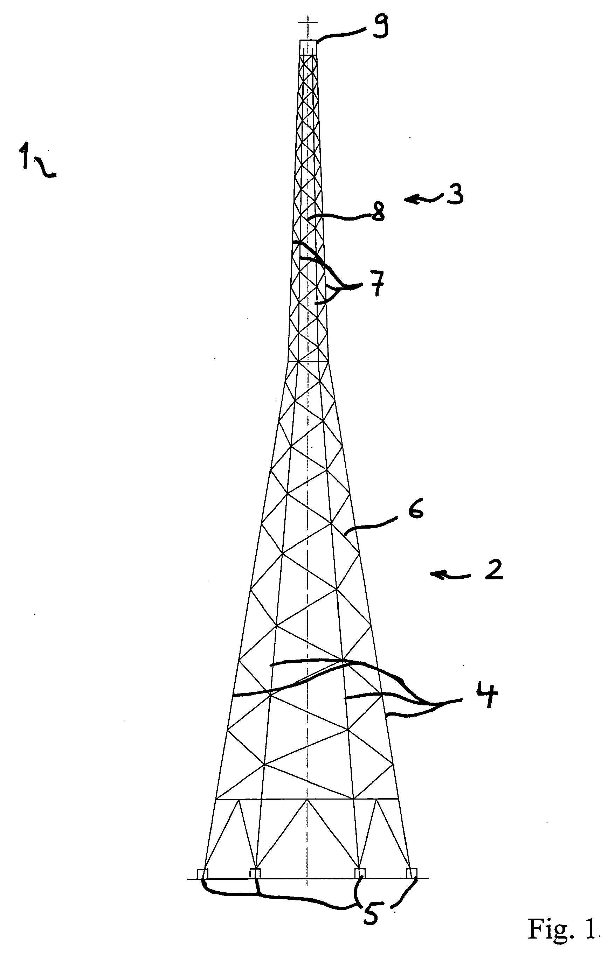

Figure 1 shows a side-view of a lattice tower 1 formed by a lower part 2 and an upper part 3 of the tower. The inclination of the lower part 2 of the tower from the bottom to the top of the lower part 2 of the tower is higher than the inclination of the upper part 3 of the tower from the connection between the lower part 2 and the upper part 3 of the tower to the top of the lattice tower 1. The lower part of tower comprises a plurality of corner posts 4 extending from a fundament 5 to the sky with an inclination so that the diameter of the lattice tower 1 decreases from the bottom to the top. The corner posts 4 are interconnected to each other by use of cross-struts 6. Thus, the corner posts 4 and the cross-struts are forming a mechanical structure in a well-known manner to build up a stable lattice tower 1.

The upper part 3 of tower is formed by a plurality of masts 7 having a star-shaped cross-section. The number of masts 7 corresponds to the number of corner posts 4 of the lower part 2 of tower. The masts 7 are also interconnected with each other by use of cross-struts 8.

The distance between connection points of cross-struts 8 and masts 7 is shorter than the distance between connection points of cross-struts 6 and posts 4, because of small diameter and lower inclination in the upper part of tower compared to the lower part of tower. This means that in upper part of tower there is lower requirement for buckling capacity and thus open section like star-shaped mast can be advantageously used instead of closed profile.

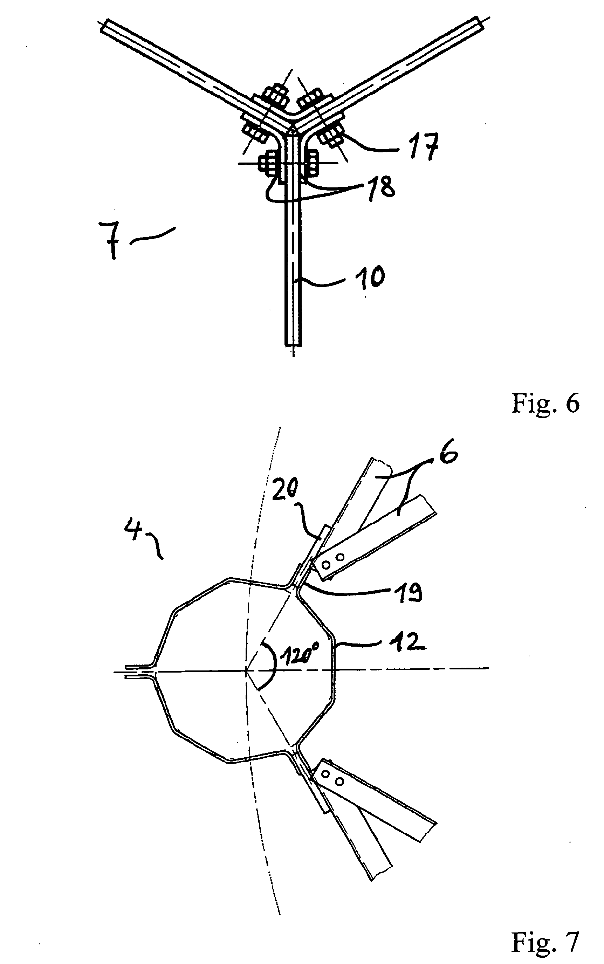

The star shaped masts 7 provide advantageous connections between the cross-struts 8 and mast 7, preferably without any separate fastening plates like can be used in the lower part 2 of the tower (see fig 7).

The top 9 of the lattice tower 1 is provided to carry any load, especially wind power stations. Wind power stations mounted on the top 9 of the lattice tower 1 comprises a generator and a plurality of rotatable blades.

Due to the reduced inclination of the upper part 3 of the tower compared to the inclination of the lower part 2 of the tower, the space between the masts 7 and blades of a wind power station is increased. It can be seen from figure 1 that the diameter of the upper part 3 of the tower decreases from the bottom to the top 9 of the upper part 3 of tower less than the diameter of the lower part 2 of tower decreases from the bottom to the top.

The reason for the upper part 3 of tower having a decreased inclination is that the masts 7 are formed by metal profiles being star-shaped in cross-section.

The difference between inclination of the upper and lower part of tower can be accomplished by angles made to masts or to posts or preferable to the additional transmission element in order to achieve posts of lower part and masts of upper part non-parallel to each other.

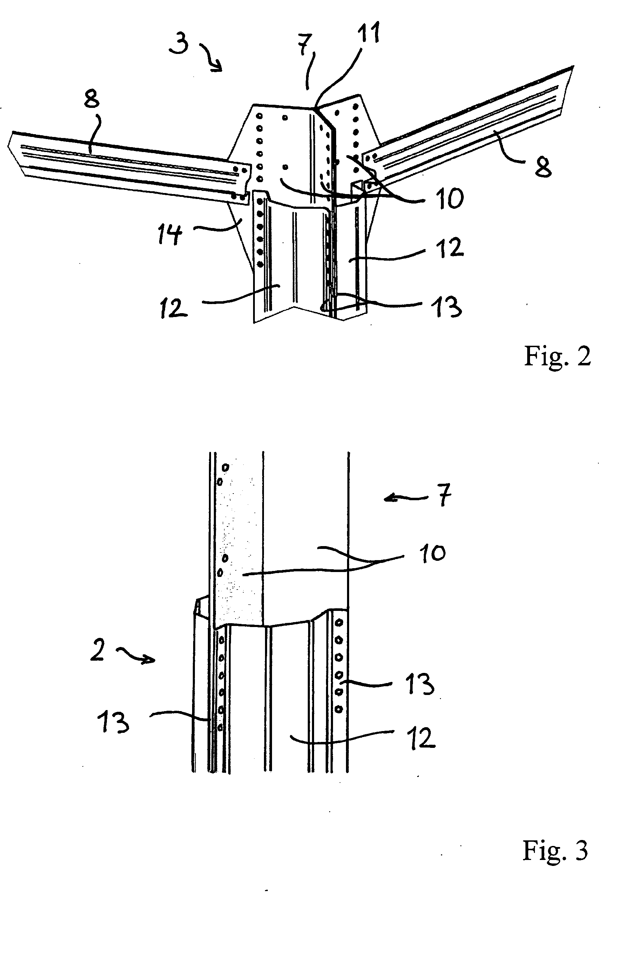

Figure 2 shows a perspective view of the connection between the lower part 2 and upper part 3 of tower. A mast 7 of the upper part 3 of tower is formed by three wings mounted together on a center line 11 so that the cross-section is star-shaped. The wings 10 are extending from the center line into other directions from each other. The angle between the wings is 120° for the embodiment shown in figure 2 comprising three wings. However, other designs of a mast 7 having two, four, five, six etc. wings are also possible. Most preferably, mast 7 is having three wings 10.

Preferably the amount of profile elements 12 corresponds to the amount of wings 10.

The lower part 2 of the tower is formed by angled profile elements 12 forming a hollow pillar. In the embodiment according to figure 2, three identical profile elements 12 are provided. Each profile element 12 covers a degree of 120° so that the wings 10 of the upper mast 7 are located between two adjacent flanges 13 of profile elements 12. Thus, the upper part 3 of tower can be directly connected to the lower part 2 of the tower.

As can be seen in figure 2, the wings 10 may have extensions 14 allowing the connection of cross-struts 8 to the wings 10. In other words, the wings 10 can be longer than flanges 13 of profile elements in assembled structure.

Figure 3 shows a side view of the connection between the lower part 2 and the upper part 3 of tower. It can be seen that the wings 10 are located between two adjacent flanges 13 side-by-side so that the flanges 13 of two adjacent angled profile elements 12 can be connected with the intermediate wing 10 e. g. by way of screws or rivets.

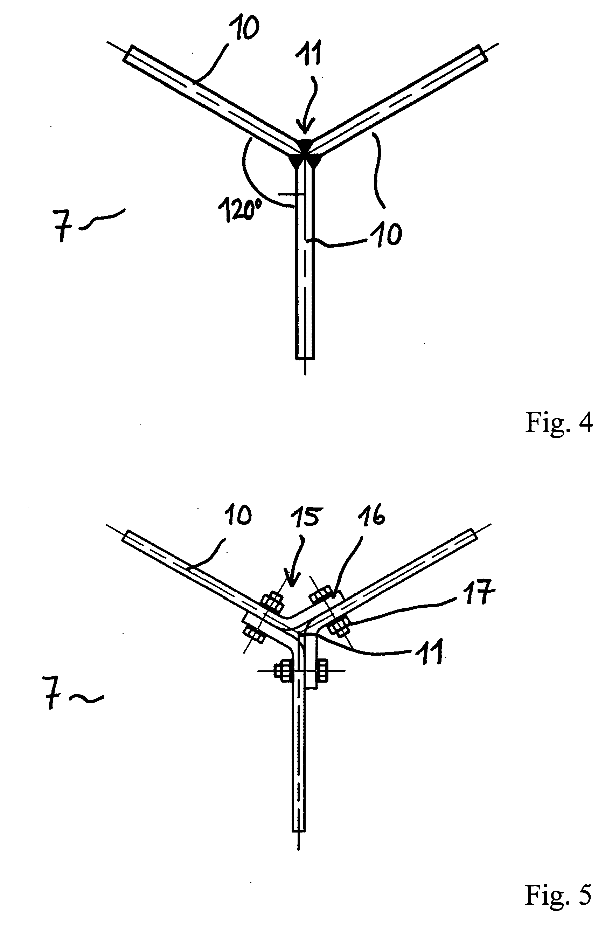

Figure 4 shows a cross-sectional view of the first embodiment of a mast 7. Three metal bar elements each forming wings 10 are welded to each other along a centre line 11. The wings are arranged in an angle of 120° to each other. The wings 10 are much smaller than the longitudinal length of the wings.

Figure 5 shows another embodiment of a mast 7. The three wings 10 are also arranged in an angle of 120° to each other to form a star-shaped cross-section of the mast. Each wing 10 is formed by a metal bar element angled in a mounting area 15 by 120° to form a mounting flange 16. The metal bar elements (wings 10) of the mast 7 are located side-by-side to each other around the center line 11 so that a mounting flange 16 abuts to a mounting area 15 of another wing. Thus, a mounting flange 16 can be fastened to the mounting area 15 of the adjacent wing 10, e. g. by screws 17 or rivets.

Figure 6 shows a third embodiment of a mast 7, wherein the three wings 10 are formed by metal-bar elements. The wings 10 are located close to each other along the centre line 11 with their side faces and are connected with each other by angle brackets abutting the bar elements in a place close to the center line 11. One wing 10 is located between two angle brackets 18 so that a pair of angled brackets 18 are connected to a dedicated wing 10 e. g. by use of screws 17 or rivets. Each angled bracket 18 abuts to wings 10 on their adjacent sides.

The angled brackets 18 are bent in an angle of 120° in the embodiment of three wings.

The angle would be 90° for a version of four wings 10, 72° for a version of five wings and 60° for a version of six wings 10.

Figure 7 shows the lower part 2 of the tower in a cross-section. It can be seen that the corner post 4 is formed by use of three angled profile elements 12 being curved such that the flanges 19 are extending in a direction to form a triangle. Each angled profile element 12 covers an area of 120°. Connection plates 20 can be located between two flanges 19 lying side-by-side to each other so that cross-struts 6 can be mounted on a corner post 4 to form the lattice tower.

The design of the lower part 2 of tower is e. g. known from DE 10 2008 018 852 A1 as cited above and incorporated with its content into this application by reference.

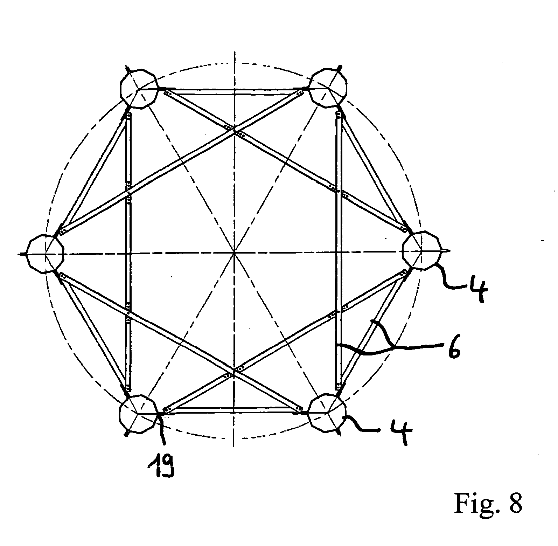

Figure 8 shows a cross-sectional view of the lower part 2 of the lattice tower 1 formed by six corner posts 4 connected to each other by cross-struts 6.

It can be seen that the direction of extension of the flanges 19 with a corner post 4 is optimised in a way that the flanges 19 are in line with the flanges of the neighbouring posts 4.

## Claims

1. Lattice tower (1), in particular for wind power stations, comprising a lower part (2) of tower, said lower part (2) of tower comprising a plurality of corner posts (4), said corner posts (4) each are formed by a plurality of profile elements (12) having a curved or angled profile in cross-section and being joined together to form an overall profile of the corner posts (4) being closed in cross-section, and comprising cross-struts (6), said cross-struts (6) extending between dedicated corner posts (4) for connecting the corner posts (4) to form a lattice tower (1), and comprising an upper part (3) of tower, **characterized in that** the upper part (3) of the tower comprises at least one mast (7) having a star-shaped cross-section, said mast (7) being formed by a plurality of wings (10) extending from a common center line (11) in different directions from each other.

2. Lattice tower (1) according to claim 1, **characterized in that** the upper part (3) of tower directly joins the upper free end of the lower part (2) of tower, wherein the wings (10) each are located between two dedicated flanges (19) of profile elements (12) forming a hollow post, said flanges (19) and the intermediate wings (10) being arranged side-by-side and are connected to each other.

3. Lattice tower (1) according to claim 1, **characterized in that** the upper part (3) of tower indirectly joins the upper free end of the lower part (2) of tower, wherein a transmission element is provided between the lower part (2) of tower and the upper part (3) of tower.

4. Lattice tower (1) according to claim 1 or 2, **characterized in that** the upper part (3) of tower comprising a number of masts (7) according to the number of corner posts (4), wherein dedicated masts (7) are connected with each other by cross-struts (8) to form the lattice tower (1).

5. Lattice tower (1) according to one of the preceding claims, **characterized in that** the at least one star-shaped mast (7) is assembled by use of a plurality of metal bar elements forming the wings (10), wherein the metal bar elements are welded to each other along the center line (11) on the edges facing to each other.

6. Lattice tower (1) according to one of the preceding claims, **characterized in that** the star-shaped mast (7) being assembled by a plurality of metal bar elements forming the wings (10), wherein the metal bar elements are joint to each other by use of angle brackets (18) abutting the metal bar elements adjacent to the center line.

7. Lattice tower (1) according to one of the claims 1 to 4, **characterized in, that** the star-shaped mast (7) is assembled by use of a plurality of metal bar elements forming the wings (10), wherein the metal bar elements are angled in a mounting area (15) along the centre line (11) to form mounting flanges (16), and wherein bar elements arranged side-by-side are joint to each other on the mounting flange (16) of a bar element and on a mounting area (15) of the other bar element, the mounting flange (16) of the first bar element abutting to the mounting area (15) of the other bar element.
